(19) Europäisches Patentamt / European Patent Office / Office européen des brevets

(11) **EP 1 720 080 B1**

(12) **EUROPÄISCHE PATENTSCHRIFT**

(45) Veröffentlichungstag und Bekanntmachung des Hinweises auf die Patenterteilung:
**11.06.2008 Patentblatt 2008/24**

(51) Int Cl.:
**G05B 13/04** *(2006.01)* **G05B 23/02** *(2006.01)*

(21) Anmeldenummer: **06003751.2**

(22) Anmeldetag: **24.02.2006**

(54) **Verfahren zur Optimierung von Reglerparametern**

Method for optimising controller parameters

Procédé destiné à l'optimisation de paramètres de régulation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.04.2005 DE 102005019522**
**16.02.2006 DE 102006007115**

(43) Veröffentlichungstag der Anmeldung:
**08.11.2006 Patentblatt 2006/45**

(73) Patentinhaber: **Etel S.A.**
**2112 Môtiers (CH)**

(72) Erfinder:
• **Mathia, Michel**
**2108 Couvet (CH)**
• **Very, Vincent**
**25500 Morteau (FR)**

(74) Vertreter: **Pleyer, Hans Anno**
**Dr. Johannes Heidenhain GmbH**
**Patentabteilung**
**Postfach 12 60**
**D-83292 Traunreut (DE)**

(56) Entgegenhaltungen:
**US-A1- 2002 111 758** **US-A1- 2004 204 888**

• **PARTANEN A G ET AL: "Two stage iterative identification/controller design and direct experimental controller refinement" PROCEEDINGS OF THE CONFERENCE ON DECISION AND CONTROL. SAN ANTONIO, DEC. 15 - 17, 1993, NEW YORK, IEEE, US, Bd. VOL. 3 CONF. 32, 15. Dezember 1993 (1993-12-15), Seiten 2833-2838, XP010116126 ISBN: 0-7803-1298-8**
• **RAO G P ET AL: "Identification of continuous-time systems" IEE PROCEEDINGS: CONTROL THEORY AND APPLICATIONS, IEE, STEVENAGE, HERTS, GB, Bd. 153, Nr. 2, 13. März 2006 (2006-03-13), Seiten 185-220, XP006026007 ISSN: 1350-2379**
• **SCHRAMA R J P: "Accurate identification for control: the necessity of an iterative scheme" IEEE TRANSACTIONS ON AUTOMATIC CONTROL USA, Bd. 37, Nr. 7, Juli 1992 (1992-07), Seiten 991-994, XP002391838 ISSN: 0018-9286**
• **ZHUQUAN ZANG ET AL: "H2 iterative model refinement and control robustness enhancement" PROCEEDINGS OF THE CONFERENCE ON DECISION AND CONTROL. BRIGHTON, DEC. 11 - 13, 1991, NEW YORK, IEEE, US, Bd. VOL. 1 CONF. 30, 11. Dezember 1991 (1991-12-11), Seiten 279-284, XP010723157 ISBN: 0-7803-0450-0**

**Beschreibung**

Die Erfindung betrifft ein Verfahren zur Optimierung von Reglerparametern. Solche Verfahren dienen dazu, den Regelkreis eines Antriebssystems einer speziellen Applikation zu analysieren und zu optimieren. So lassen sich optimierte Reglerparameter für die verwendeten Reglerstrukturen finden.

Die Anforderungen an moderne Antriebssysteme wachsen immer weiter an. So müssen beispielsweise in einem Bestückungsautomaten immer kleinere Bauteile immer genauer auf einer Platine platziert werden. Dabei steigt die Zahl der Bauteile pro Platinenfläche durch die Miniaturisierung beständig an, so dass auch die Geschwindigkeit der Bauteilpositionierung weiter steigen muss, um einen möglichst hohen Durchsatz an einer solchen Maschine zu erhalten. Höhere Positioniergenauigkeit bei gleichzeitig kürzeren Positionierzeiten sind eigentlich konträre Aufgaben, die sich nur durch optimal parametrierte Regelkreise in Verbindung mit hochwertigen Motoren und Positionsmeßsystemen lösen lassen.

Um jedoch die Parameter eines Regelkreises optimal einstellen zu können, ist eine möglichst genaue Kenntnis des Antriebssystems wichtig. Ein Werkzeug zur Analyse eines Antriebssystems ist die Ermittlung der Übertragungsfunktion des Antriebssystems bzw. eines Übertragers innerhalb des Antriebssystems. Diese Übertragungsfunktion beschreibt, welche Dämpfung und welche Phasenverschiebung ein am Eingang des Übertragers angelegtes Signal einer bestimmten Frequenz bis zum Ausgang erfährt. Die Ermittlung der Übertragungsfunktion des Antriebssystems bzw. des Übertragers (diese Ermittlung wird auch Identifikation genannt) sollte möglichst für den geöffneten Regelkreis durchgeführt werden, da die Kenntnis dieser "open-loop" - Übertragungsfunktion des Zielsystems eine Aussage über die Stabilität des Antriebssystems ermöglicht. Wie unten beschrieben kann die "open-loop" - Übertragungsfunktion auch bei geschlossenem Regelkreis ermittelt werden.

Zur Identifikation eines Regelkreises oder allgemeiner eines Übertragers wird ein Eingangssignal am Eingang des Regelkreises angelegt. Durch Erfassung des Eingangssignals und des am Ausgang des Übertragers auftretenden Ausgangssignals lässt sich die Übertragungsfunktion der Übertragers bestimmen. Die Signale können dabei sowohl als Funktionen der Zeit als auch, was in diesem Bereich der Technik üblicher ist, als Funktionen der Frequenz betrachtet werden. Letztere Darstellung hat deutliche Vorteile bei der Beurteilung der Eigenschaften eines Regelkreises. Die Übertragungsfunktion eines Übertragers ergibt sich aus der Division des in den Frequenzbereich transformierten Ausgangssignals durch das in den Frequenzbereich transformierte Eingangssignal. Kriterien wie Stabilität und Empfindlichkeit gegenüber Störungen (Rauschen) können anhand der komplexen Übertragungsfunktion leicht beurteilt werden. Durch Variation der Reglerparameter kann unter Einsatz von Optimierungsverfahren ein optimaler Parametersatz für die Reglerstruktur gefunden werden.

Die DE 10316977 A1 beschreibt ein Verfahren zur Identifikation eines Regelkreises, bei dem als Eingangssignale Rauschsignale dienen, die unterschiedliche Frequenzbereiche abdecken. So kann die Intensität jedes Rauschsignals an den jeweiligen Frequenzbereich angepasst werden, die Qualität der Identifikation wird dadurch deutlich verbessert.

In einem Aufsatz von PARTANEN A G ET AL: "Two stage iterative identification/controller design and direct experimental controller refinement" (PROCEEDINGS OF THE CONFERENCE ON DECISION AND CONTROL. SAN ANTONIO, DEC. 15 - 17, 1993, NEW YORK, IEEE, US, Bd. VOL. 3 CONF. 32, 15. Dezember 1993 (1993-12-15), Seiten 2833-2838, XP010116126 ISBN: 0-7803-1298-8) wird ein zweistufiges Verfahren zur Identifikation und zum Reglerdesign beschrieben. Der Aufsatz beschäftigt sich mit der Anpassung eines sehr aufwändigen parametrischen Modells an das betrachtete System und mit der Optimierung eines Reglers. Zudem wird die Stabilität des parametrisches Modells in Frage gestellt, wenn es nicht nahe am betrachteten System liegt.

Die EP 1180734 B1 beschreibt ein Identifikationsverfahren mit iterativer Optimierung der Reglerparameter anhand von Qualitätskriterien wie Phasenreserve und Amplitudenreserve. Dabei wird nach jeder Veränderung des Regelkreises eine erneute Identifikation vorgenommen. Da jede Identifikation einen nicht unerheblichen Zeitaufwand bedeutet, ist solch ein Verfahren unter Umständen recht zeitaufwändig.

Aufgabe der Erfindung ist es daher, ein Verfahren zur Optimierung von Reglerparametern anzugeben, bei dem die Zahl der nötigen Identifikationen möglichst klein gehalten wird.

Diese Aufgabe wird gelöst durch ein Verfahren mit den Merkmalen des Anspruches 1. Vorteilhafte Ausgestaltungen eines solchen Verfahrens ergeben sich aus den Merkmalen, die in den von Anspruch 1 abhängigen Ansprüchen aufgeführt sind.

Es wird ein Verfahren zur Optimierung von Reglerparametern beschrieben, bei dem eine Übertragungsfunktion eines Übertragers bestehend aus einem Regler und einem zu regelnden System zunächst experimentell ermittelt wird. Qualitätskriterien werden aus der Übertragungsfunktion des Übertragers abgeleitet, wobei die Qualitätskriterien zur Optimierung von Reglerparametern verwendet werden. Nach einer Variation der Reglerparameter wird eine modifizierte Übertragungsfunktion aus der Übertragungsfunktion des unmodifizierten Übertragers ohne erneute experimentelle Identifikation berechnet.

Die Erfindung beruht auf der Erkenntnis, dass es mit Hilfe der Algebra von Übertragungsfunktionen möglich ist, die Übertragungsfunktion eines Übertragers, bestehend aus einem Regler und einem zu regelndem System (Black Box) zu berechnen, wenn die Übertragungsfunktion des Übertragers einmal experimentell ermittelt wurde.

Die Übertragungsfunktion des Reglers, dessen Struktur bekannt sein muss, lässt sich berechnen, die Übertragungsfunktion des Übertragers lässt sich experimentell bestimmen. Dividiert man die Übertragungsfunktion des Übertragers durch die Übertragungsfunktion des Reglers (in der Parametriemit der die experimentelle Identifikation durchgeführt wurde), so erhält man die Übertragungsfunktion der Black Box, wenn der Regler und die Black Box wie üblich in Reihe geschaltet sind. Diese Übertragungsfunktion der Black Box ändert sich für andere Parametrierungen des Reglers oder andere Reglerstrukturen nicht.

Es ist daher möglich, anhand der rechnerisch ermittelten Übertragungsfunktion des Reglers und der experimentell bestimmten Übertragungsfunktion des Übertragers bzw. der Black Box die Übertragungsfunktion des Übertragers für unterschiedliche Parametrierungen des Reglers oder sogar für unterschiedliche Typen von Reglern zu berechnen.

Ein Optimierungsverfahren für die Parametrierung des Reglers, das auf die Beurteilung der Eigenschaften der Übertragungsfunktion des Übertragers abstellt, kann so also ohne zeitraubende Wiederholungen der experimentellen Identifikation durchgeführt werden. Eine experimentelle Identifikation ist nur einmal zur Bestimmung der Übertragungsfunktion des Übertragers und damit auch der Übertragungsfunktion der Black Box notwendig. Die wiederholt notwendige Bestimmung der Übertragungsfunktion des Übertragers nach Modifikation der Reglerparameter und der aus dieser Übertragungsfunktion abgeleiteten Qualitätskriterien kann dann rechnerisch durchgeführt werden.

In der Praxis empfiehlt es sich eventuell, das gefundene Optimum nochmals anhand einer experimentellen Identifikation zu verifizieren, bzw. eine solche Verifikation dann vorzunehmen, wenn sich der Parametersatz zu sehr verändert hat, oder die Reglerstruktur verändert wurde.

Weitere Vorteile sowie Einzelheiten der vorliegenden Erfindung ergeben sich aus der nachfolgenden Beschreibung verschiedener Ausführungsformen anhand der Figuren. Dabei zeigt

Figur 1      eine Prinzipdarstellung eines Übertragers,

Figur 2      verschiedene Übertragungsfunktionen,

Figur 3      einen Regelkreis,

Figur 4      ein Ausführungsbeispiel des Verfahrens zur Optimierung von Reglerparametern,

Figur 5      ein Anregungsspektrum zur Identifikation einer Übertragungsfunktion.

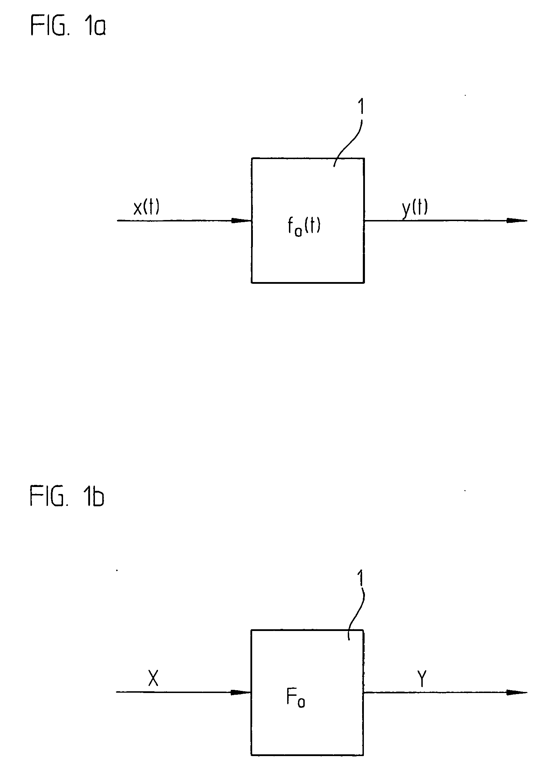

Zunächst soll anhand der Figuren 1 - 3 der technische Hintergrund des Verfahrens dargestellt werden.

Figuren 1a und 1b zeigen jeweils einen Übertrager 1. In der zeitlichen Darstellung nach Figur 1 a wird an den Übertrager 1 ein zeitlich veränderliches Eingangssignal x(t) angelegt, am Ausgang des Übertragers 1 erhält man eine zeitlich veränderliche Antwort y(t). Die Beziehung zwischen beiden ist durch die Impulsantwort fo(t) definiert, deren Faltung mit x(t) gerade y(t) ergibt.

Üblicherweise werden solche Systeme nicht in der zeitlichen Darstellung betrachtet, sondern in einer transformierten Darstellung als Funktion der Frequenz. Dies ist in Figur 1b angedeutet: Das Eingangssignal X wird durch die Übertragungsfunktion Fo zum Ausgangssignal Y transformiert. Da Fo = Y / X gilt, lässt sich die Übertragungsfunktion Fo durch Anlegen eines bekannten Eingangssignals X und Messen des Ausgangssignals Y experimentell bestimmen bzw. identifizieren. Für digitale Regler kommt zur Umwandlung von diskreten Signalen im Zeitbereich in den Frequenzbereich die Z-Transformation zum Einsatz.

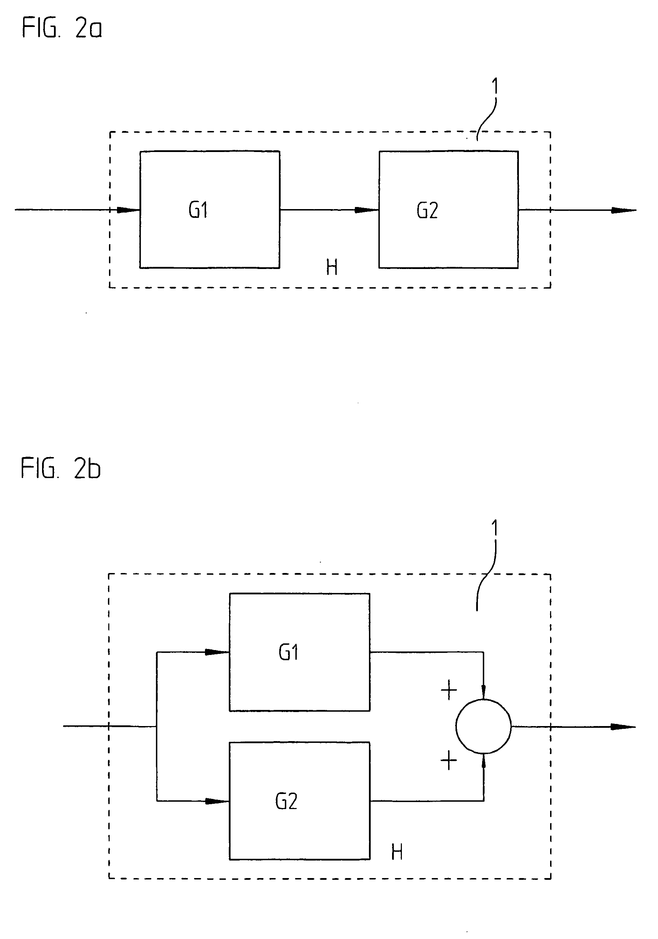

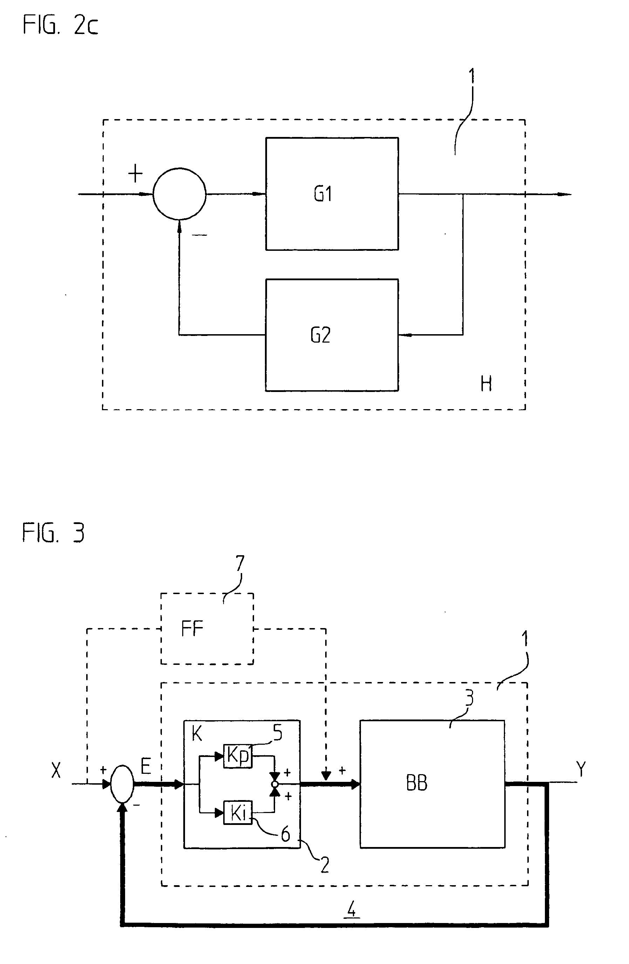

Die Figuren 2a, b, c geben allgemeine Beziehungen der Algebra solcher Übertragungsfunktionen wieder, und zwar für den Fall einer Reihenschaltung zweier Übertragungsfunktionen G1 und G2 (Figur 2a), für den Fall einer Parallelschaltung zweier Übertragungsfunktionen G1 und G2 (Figur 2b) und für die subtraktive Rückkopplung des Ausgangs einer Übertragungsfunktion G1 über eine zweite Übertragungsfunktion G2 auf den Eingang der ersten Übertragungsfunktion G1 (Figur 2c).

Die Übertragungsfunktion H des Gesamtsystems ist jeweils:

Figur 2a:      H = G1 * G2

Figur 2b:      H = G1 + G2

Figur 2c:      H = G1 / (1 + G1 * G2)

Figur 3 zeigt einen Regelkreis 4, mit einem Übertrager 1, der aus einem Regler 2 und einer Black Box 3 besteht.

Der Ausgang Y des Übertragers 1 ist subtraktiv auf seinen Eingang E rückgekoppelt. Der Regler 2 ist in diesem Beispiel ein PI - Regler, mit einem P-Zweig 5 und einem I-Zweig 6. Die Parameter dieses Reglers sind beispielsweise der proportionale Verstärkungsfaktor Kp und der integrale Verstärkungsfaktor Ki. Die Black Box 3 enthält das zu regelnde System. Wenn der Regler ein Stromregler in einem Antriebsregelkreis ist, so enthält die Black Box das Leistungteil des Antriebs und den Elektromotor, als Rückkopplungswert dient dann der gemessene Strom, der tatsächlich in den Spulen des Motors fließt.

Die Identifikation der "open-loop" - Übertragungsfunktion Fo des Übertragers 1 kann bei geöffnetem Regelkreis 4 erfolgen. Hierzu muss der Rückkopplungszweig des Regelkreises 4, der den Ausgang Y auf den Eingang X schaltet, aufgetrennt werden. Am Übertrager 1 liegt dann das Eingangssignal X = E unmittelbar an, es gilt

$$Fo = Y / E = Y / X.$$

Oft ist jedoch eine Öffnung des Regelkreises 4 nicht möglich oder nicht erwünscht, da mit geschlossenem Regelkreis 4 bessere Ergebnisse erzielt werden. Dann besteht die Möglichkeit, auf die Identifikation der "open-loop" - Übertragungsfunktion Fo bei geschlossenem Regelkreis 4 zurückgreifen. Es muss dann betrachtet werden, welches Signal am Eingang des Übertragers 1 anliegt. Im in der Figur 3 dargestellten Fall gilt für die gesuchte "open-loop" - Übertragungsfunktion

$$Fo = Y / E = Y / (X - Y),$$

da am Eingang des Übertragers 1 ein Differenzsignal E aus Eingangssignal X und Ausgangssignal Y anliegt, und nicht wie im Fall des tatsächlich geöffneten Regelkreises unmittelbar das Eingangssignal X.

Die Identifikation der Übertragungsfunktion Fo des Übertragers 1 der Figur 3 lässt sich nun experimentell durchführen. Da sich die Übertragungsfunktion K des Reglers 2 einfach berechnen lässt (Formel der Figur 2b), kann man die Übertragungsfunktion BB der Black Box 3 ableiten. Im vorliegenden einfachen Fall der Reihenschaltung aus Regler 2 und Black Box 3 gilt

$$BB = Fo / K.$$

Die Black Box 3 kann selbst weitere Regelkreise enthalten. Ist der Regler 2 beispielsweise ein Positionsregler, so kann die Black Box 3 die dem Positionsregler nach geschalteten Regelkreise für Geschwindigkeit und Strom oder Drehmoment in einem Antriebssystem enthalten. Für die Identifikation der Übertragungsfunktion BB der Black Box 3 ist das nicht wichtig, sie kann anhand der experimentell ermittelten "open-loop" - Übertragungsfunktion Fo und der bekannten Reglerstruktur 2 rechnerisch ermittelt werden.

Zwischen dem Regler 2 und der Black Box 3 kann wie in der Figur 3 gestrichelt angedeutet ein Vorsteuersignal aufgeschaltet werden. Dieses Vorsteuersignal wird durch eine Vorsteuerung 7 mit der Übertragungsfunktion FF aus dem Eingangssignal X gewonnen. Nach den Regeln der Algebra von Übertragungsfunktionen ergibt sich die "open-loop" - Übertragungsfunktion Fo dann zu

$$Fo = (K * Y) / (K(X - Y) + FF * X)$$

für die Identifikation bei geschlossenem Regelkreis. In vielen Anwendungen kann zur Optimierung der Reglerparameter Kp, Ki die Vorsteuerung jedoch vernachlässigt, also FF = 0 gesetzt werden.

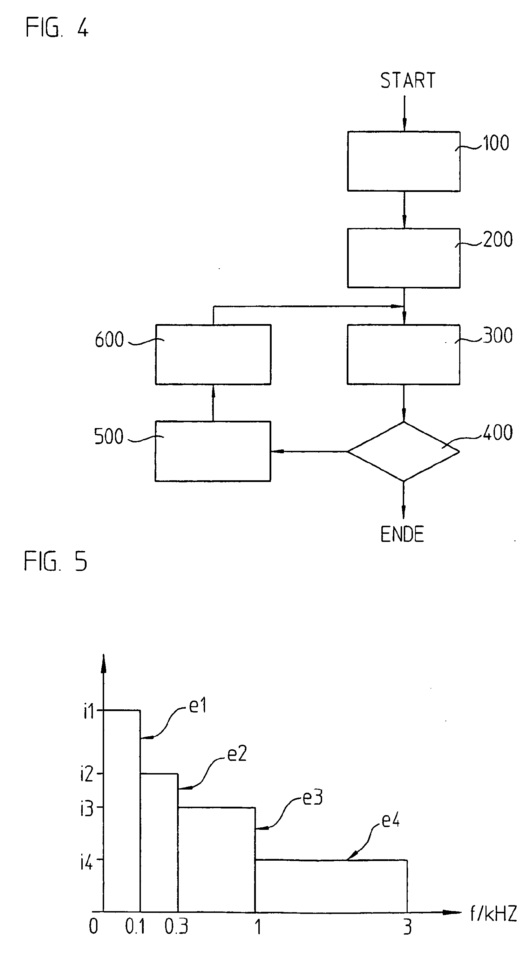

Ein Verfahren zur Optimierung der Reglerparameter Kp, Ki des Regelkreises 4 ist in Figur 4 skizziert.

In einem Schritt 100 wird experimentell die "open-loop" - Übertragungsfunktion Fo des Übertragers 1 bestimmt. Dies kann wie oben beschrieben bei geöffnetem oder geschlossenem Regelkreis 4 erfolgen. Die Identifikation erfolgt durch Anlegen eines Eingangssignals X bzw. Differenzsignals E und Messen der Antwort Y des Übertragers 1.

In einem Schritt 200 wird die Übertragungsfunktion K des Reglers 2 im Übertrager 1 anhand seiner aktuellen Parametrierung berechnet. Die Übertragungsfunktion BB der Black Box 3 im Übertrager 1 ergibt sich dann im einfachen Fall einer Reihenschaltung aus Regler 2 und Black Box 3 zu

$$BB = Fo / K.$$

Etwas aufwändiger ist die Berechung, falls wie in Figur 3 angedeutet eine Vorsteuerung 7 mit einer Übertragungsfunktion FF verwendet wird. Es gilt dann

$$BB = Y / (FF * X + K * (X - Y)).$$

In einem Schritt 300 wird sodann anhand der aktuellen Übertragungsfunktion Fo des Übertragers ein Qualitätskriterium Q berechnet. Dieses Qualitätskriterium Q erlaubt beispielsweise eine Aussage über die Stabilität des Regelkreises 4, oder über dessen Empfindlichkeit gegenüber Störungen (Rauschen). Es können durchaus auch mehrere solche Kriterien berechnet werden. Näheres zu geeigneten Qualitätskriterien findet sich weiter unten im Anhang.

In einem Schritt 400 wird überprüft, ob das Qualitätskriterium Q den gestellten Anforderungen entspricht. Ist dies der Fall, so endet das Verfahren, eine Optimierung der Reglerparameter Kp, Ki ist abgeschlossen bzw. nicht erforderlich. Alternativ könnte auch geprüft werden, ob eine vorgegebene Anzahl von Optimierungsschritten bereits erreicht wurde. Weitere Abbruchkriterien sind möglich.

Sind die Qualitätskriterien Q nicht befriedigend, oder ist die vorgegebene Anzahl nicht erreicht, so verzweigt das Verfahren zu Schritt 500, in dem die Reglerparameter Kp, Ki variiert werden. Dabei können verschiedenste Strategien (Ausprobieren von Kombinationen mit einer gewissen Schrittweite, Richtung des größten Anstieges, "simulated annealing", Newton - Gauss, Fletcher - Powell, Fletcher - Reeves, Nelder - Mead, Methode kleinster Fehlerquadrate etc.) zur Variation verwendet werden, um letztlich zu möglichst optimalen Parametersätzen zu gelangen.

Im Schritt 600 wird nun anstelle einer erneuten experimentellen Identifikation der (wegen der veränderten Reglerparameter Kp, Ki) modifizierten Übertragungsfunktion Fo' eine zeitsparende Berechnung von Fo' durchgeführt. Da sich die modifizierte Übertragungsfunktion K' des Reglers berechnen lässt, kann auch die modifizierte Übertragungsfunktion Fo' berechnet werden als

$$Fo' = K' * BB, \text{ bzw. } Fo' = Fo * K' / K.$$

Dies gilt im einfachen Fall der Reihenschaltung von Regler 2 und Black Box 4 wie in Figur 3 ohne Vorsteuerung.

Im komplexeren Fall mit der in Figur 3 angedeuteten Vorsteuerung 7 muss der Übertrager 1 weiter gefasst werden: Er enthält das vollständige System zwischen Eingang X und Ausgang Y. Die Übertragungsfunktion Fo ist dann die Übertragungsfunktion zwischen X und Y bei geschlossenem Regelkreis 4. Nach der experimentellen Identifikation dieser Übertragungsfunktion Fo und der Berechung der Übertragungsfunktion BB der Black Box 3 aus

$$BB = Y / (FF * X + K * (X - Y))$$

ergibt sich die modifizierte Übertragungsfunktion Fo' zu

$$Fo' = BB * (FF' + K') / (1 + BB * K').$$

Die Berechnung der Übertragungsfunktion BB der Black Box 3 dient lediglich als Zwischenschritt, der bei wiederholter Berechnung einer modifizierten Übertragungsfunktion Fo' nur einmal ausgeführt werden muss und damit Rechenzeit spart. Allgemein gilt, dass sich die modifizierte Übertragungsfunktion Fo' als Funktion der während der Identifikation experimentell ermittelten unmodifizierten Übertragungsfunktion Fo (oder gleichbedeutend als Funktion der experimentell ermittelten Signale X bzw. E und Y) und der in der Reglerstruktur 2, 7 verwendeten unmodifizierten und modifizierten Übertragungsfunktionen K, FF, K', FF' berechnen lässt.

Das Verfahren wird dann wieder mit Schritt 300 fortgesetzt, in welchem erneut das Qualitätskriterium Q anhand der nun aktuellen modifizierten Übertragungsfunktion Fo' berechnet wird.

Die Reihenfolge der einzelnen Schritte oder Teilschritte des in Figur 4 dargestellten Verfahrens kann natürlich variiert werden.

Das Verfahren wird so lange fortgesetzt, bis das Qualitätskriterium alle Anforderungen erfüllt, oder bis das Verfahren von außen oder durch Zeitablauf beendet wird, falls zu hohe Anforderungen an das Qualitätskriterium Q gestellt wurden. Es kann auch einfach eine vorgegebene Anzahl von Optimierungsschritten abgearbeitet werden, bevor das dargestellte Verfahren abgebrochen wird. Dies ist besonders dann sinnvoll, wenn das Qualitätskriterium Q neben der Erfüllung bestimmter Mindestanforderungen z.B. an die Stabilität in einem anderen Parameter so gut wie möglich werden soll, etwa hinsichtlich der Bandbreite BW der "closed-loop" - Übertragungsfunktion Fc (zur Berechnung von BW und Fc: siehe Anhang) des geschlossenen Regelkreises 4.

Die Identifikation kann wie üblich durch Anlegen von einem oder mehreren Rauschsignalen, z.B. in Form von weißem Rauschen, erfolgen. Wie in der DE 10316977 A1 näher erläutert, ist aber ein Eingangssignal X, das wie in Figur 4 dargestellt aus Rauschen in mehreren Frequenzbändern e1, e2, e3, e4 besteht, besonders für eine Identifikation geeignet. Da die Frequenzbänder e1, e2, e3, e4 nacheinander angelegt werden können, ist eine der jeweiligen spektralen Empfindlichkeit angepasste Intensität i1, i2, i3, i4 möglich. Bezüglich der Details eines entsprechenden Verfahrens sei ausdrücklich auf die DE 10316977 A1 Bezug genommen.

Das hier beschriebene Verfahren eignet sich besonders für digitale Regelkreise 4, da hier alle Vorgänge automatisiert und besonders schnell durch ein Computerprogramm abgewickelt werden können. Insbesondere die Berechung der modifizierten Übertragungsfunktion Fo' nach der Variation der Reglerparameter Kp, Ki geht besonders einfach und schnell.

Ganz besonders vorteilhaft lässt sich das hier beschriebene Verfahren auch in Systemen mit einer Achse oder mit mehreren Achsen einsetzen, bei denen die für den Regler 2 einer Achse optimale Parametrierung abhängig ist von der Stellung der jeweiligen Achse oder auch der weiteren Achsen. Man kann für solche Systeme entweder ein Satz von Reglerparametern Kp, Ki suchen, der in allen möglichen Stellungen ein zufrieden stellendes Ergebnis liefert, oder aber variable, von der Lage der jeweiligen Achsen abhängige Reglerparameter Kp, Ki verwenden. In beiden Fällen ist es nach herkömmlichen Verfahren sehr schwierig, optimierte Reglerparameter Kp, Ki zu finden. Man benötigt entweder sehr viele Experimente, um jeden Satz Reglerparameter in jeder möglichen Stellung der Achse bzw. der Achsen zu verifizieren, oder man muss sich ausschließlich auf Simulationen verlassen, was zu einer großen Unsicherheit und damit zwangsläufig sehr konservativ gewählten Reglerparametern Kp, Ki führt.

In Anwendung des oben beschriebenen Verfahrens in einem Mehrachssystem müssen die Übertragungsfunktionen Fo der beteiligten Achsen nur jeweils einmal für jede mögliche Kombination von Achspositionen ermittelt und daraus ein Qualitätskriterium Q für jede dieser möglichen Kombinationen abgeleitet werden. Dabei wählt man sinnvolle Schritte für die untersuchten Achspositionen, so dass positionsabhängige Änderungen im Qualitätskriterium Q gut dargestellt werden können. Hierzu kann beispielsweise für einen in zwei aufeinander senkrecht stehenden Achsen beweglichen Positioniertisch auf einem Bildschirm eine Fläche dargestellt werden, deren Rasterpunkte entsprechend dem Qualitätskriterium Q eingefärbt werden. Kritische Bereiche, in denen das Qualitätskriterium Q nur einen schlechten Wert erreicht, können z.B. in rot dargestellt werden, während solche Bereiche, in denen das Qualitätskriterium Q zufrieden stellend ist, in grün dargestellt werden können. So ist es für einen Anwender des Verfahrens sehr einfach, mit einem Blick zu entscheiden, ob der gewählte Satz an Reglerparametern Kp, Ki im gesamten Verfahrbereich des Positioniertisches zu einem zufrieden stellenden Ergebnis führt. Es mag auch nützlich sein einzelne Bestandteile des Qualitätskriteriums Q wie die Bandbreite oder den Stabilitätsindikator (siehe hierzu den Anhang) darzustellen. Es ist so z.B. möglich, bei der Suche nach optimalen Parametersätzen schon in der Simulation erkennen zu können, ob es in irgend einer der möglichen Stellungen des Systems Instabilitäten gibt. Beschädigungen des Systems beim Testen des neuen Parametersatzes können so vermieden werden.

Hat man das Qualitätskriterium Q einmal auf diese Weise für den gesamten Bereich der möglichen Achsposition für einen Satz Reglerparameter Kp, Ki experimentell ermittelt, so lassen sich gemäß dem oben beschriebenen Verfahren veränderte Reglerparameter Kp, Ki rechnerisch berücksichtigen, und z.B. eine aktualisierte graphische Darstellung des Qualitätskriteriums Q über den Bereich der möglichen Achspositionen berechnen und darstellen.

Wiederum kann die Optimierung der Reglerparameter Kp, Ki automatisiert z.B. anhand von einem der weiter oben genannten Optimierungsverfahren durchgeführt werden. Dabei kann entweder das Qualitätskriterium Q in einer einzigen Stellung herangezogen und die Simulation des Qualitätskriteriums Q für die anderen Stellungen des Systems nur zur Kontrolle betrachtet werden, oder es können bei der Optimierung die Qualitätskriterien Q aller Stellungen berücksichtigt werden. Schließlich kann natürlich für jede mögliche Stellung des Systems ein eigener Satz von Reglerparametern Kp, Ki optimiert werden, die dann als ortsabhängige Reglerparameter zur Regelung des Systems verwendet werden.

**Anhang: Beispiel eines besonders geeigneten Qualitätskriteriums**

Die folgenden Betrachtungen wurden für eine digitale Regelung durchgeführt. Die Identifikation der open-loop Übertragungsfunktion Fo(fk) wurde mit einer Abtastfrequenz von 24 kHz mit 4096 Punkten in einem Frequenzbereich von

fk / Hz = 24000 * k / 4096 ; k = 1 - 2048, entsprechend 6 Hz - 12 kHz

durchgeführt.

Es gilt:

$$F_C(f_k) = \frac{F_O(f_k)}{1 + F_O(f_k)}$$ ("closed-loop" - Übertragungsfunktion)

("closed-loop" - Übertragungsfunktion)

$$S_{yp}(f_k) = \frac{1}{1 + F_O(f_k)}$$ ("sensitivity" - Übertragungsfunktion)

("sensitivity" - Übertragungsfunktion)

Für die Reglercharakteristik gilt dann (MM: Modulus Margin (ein in der einschlägigen Literatur beschriebenes Stabilitätskriterium), BW: Bandbreite, HA: höchste Verstärkung, LA: niedrigste Verstärkung unterhalb der Frequenz von HA, SI: Stabilitätsindikator):

$$MM = \min\left(\text{abs}\left(S_{yp}(f_k)^{-1}\right)\right) = \min\left(\text{abs}\left(1 + F_O(f_k)\right)\right)$$

$$SI = \frac{1}{2048} \cdot \sum_{k=1}^{2048} 20 \cdot \log 10\left(\text{abs}\left(S_{yp}(f_k)\right)\right)$$

$$HA = \max\left(\text{abs}\left(F_C(f_k)\right)\right)$$

$f_{peak}$ ist definiert durch $\text{abs}\left(F_C(f_{peak})\right) = HA$

$$LA = \min\left(\text{abs}\left(F_C(f_k)\right)\right) \text{ mit } f_k < f_{peak}$$

$$kbw = \min(k) \text{ mit } f_k > f_{peak} \text{ und } 20 \cdot \log 10\left(\text{abs}\left(F_C(f_k)\right)\right) < -3\,[\text{dB}]$$

$$BW = f_{kbw-1} + \left(f_{kbw} - f_{kbw-1}\right) \cdot \frac{10^{-3[\text{dB}]/20} - \text{abs}\left(F_C(f_{kbw-1})\right)}{\text{abs}\left(F_C(f_{kbw})\right) - \text{abs}\left(F_C(f_{kbw-1})\right)}$$

Beispiele für zu erfüllende Qualitätskriterien, die je nach System anders ausfallen können, wären dann:

$$20 \cdot \log 10 \left( \frac{1}{1 - MM} \right) > 6 \text{ [dB]}$$

$$\text{abs}(SI) < 0.1 \text{ [dB]}$$

$$20 \cdot \log 10(HA) < 1 \text{ [dB]}$$

$$20 \cdot \log 10(LA) > -2 \text{ [dB]}$$

Ein Qualitätskriterium Q, das alle diese Randbedingungen enthält, und außerdem eine Maximierung der Bandbreite BW ermöglicht, könnte dann sein:

$$Q = \log 10 \begin{pmatrix} C_1 / BW + \\ \exp(C_2 \cdot (6 - 20 \cdot \log 10(1/(1 - MM)))) + \\ \exp(C_3 \cdot (-0.1 + \text{abs}(SI))) + \\ \exp(C_4 \cdot (-1 + 20 \cdot \log 10(HA))) + \\ \exp(C_5 \cdot (-2 - 20 \cdot \log 10(LA))) \end{pmatrix}$$

Die Koeffizienten C1 - C5 hängen dabei von den Ansprüchen ab, die an das jeweilige System gestellt werden. Q wird sehr schnell sehr groß, falls eines der genannten Teilkriterien nicht erfüllt ist. Je kleiner Q ist, desto besser. Dadurch lassen sich gängige Optimierungsalgorithmen einsetzen, um einen Parametersatz Kp, Ki mit möglichst kleinem Q zu finden.

**Patentansprüche**

1.  Verfahren zur Optimierung von Reglerparametern, bei dem eine Übertragungsfunktion (Fo) eines Übertragers (1) bestehend aus einer Reglerstruktur (2, 7) und einer Black Box (3) als zu regelndem System experimentell ermittelt wird, wobei die Übertragungsfunktion (Fo) die frequenzabhängige Dämpfung und Phasenverschiebung beschreibt, die ein am Übertrager (1) angelegtes Signal (X, E) erfährt, und bei dem Qualitätskriterien (Q, MM, BW, SI, HA, LA) aus der Übertragungsfunktion (Fo) des Übertragers (1) abgeleitet werden, wobei die Qualitätskriterien (Q, MM, BW, SI, HA, LA) zur Optimierung, von Reglerparametern (Kp, Ki) verwendet werden, **dadurch gekennzeichnet, dass**

    a) nach einer Modifikation der Reglerparameter (Kp, Ki) anstelle einer erneuten experimentellen Ermittlung einer modifizierten Übertragungsfunktion (Fo') des Übertragers (1) eine Berechnung der modifizierten Übertragungsfunktion des Übertragers (Fo') aus der Übertragungsfunktion (Fo) des unmodifizierten Übertragers (1) durchgeführt wird,
    b) indem die Übertragungsfunktion (K, FF) der Reglerstruktur (2, 7) vor der Modifikation der Reglerparameter (Kp, Ki) berechnet wird, und eine modifizierte Übertragungsfunktion (K', FF') der Reglerstruktur (2, 7) nach der Modifikation berechnet wird, und
    c) indem die modifizierte Übertragungsfunktion des Übertragers (Fo') als Funktion der experimentell ermittelten Übertragungsfunktion (Fo) des unmodifizierten Übertragers (1) und der unmodifizierten und modifizierten Übertragungsfunktionen (K, FF, K', FF') der Reglerstruktur (2, 7) berechnet wird,
    d) und wobei die Berechung der Qualitätskriterien (Q, MM, BW, SI, HA, LA) anhand der modifizierten Übertragungsfunktion des Übertragers (Fo') wiederholt wird.

**2.** Verfahren nach Anspruch 1, **dadurch gekennzeichnet, dass** die Übertragungsfunktion (BB) der Black Box (3) aus einmal experimentell ermittelten Daten (X, E, Y) und den in der Reglerstruktur (2, 7) verwendeten Übertragungsfunktionen (K, FF) berechnet wird.

**3.** Verfahren nach einem der vorhergehenden Ansprüche, **dadurch gekennzeichnet, dass** die Übertragungsfunktion (Fo), bzw. die modifizierte Übertragungsfunktion (Fo') für den Fall eines geöffneten Regelkreises (4) gilt.

**4.** Verfahren nach einem der vorhergehenden Ansprüche, **dadurch gekennzeichnet, dass** die Übertragungsfunktionen (Fo) des Übertragers (1) bei geschlossenem Regelkreis (4) ermittelt wird.

**5.** Verfahren nach einem der vorhergehenden Ansprüche, **dadurch gekennzeichnet, dass** die experimentelle Bestimmung der Übertragungsfunktion (Fo) durch Anlegen von wenigstens einem Rauschsignal (e1, e2, e3, e4) an den Eingang des Übertragers (1) erfolgt.

**6.** Verfahren nach Anspruch 5, **dadurch gekennzeichnet, dass** mehrere Rauschsignale (e1, e2, e3, e4) unterschiedlicher Frequenzbereiche verwendet werden.

**7.** Verfahren nach Anspruch 6, **dadurch gekennzeichnet, dass** die Rauschsignale (e1, e2, e3, e4) unterschiedliche Intensität (i1, i2, i3, i4) aufweisen.

**8.** Verfahren nach einem der vorhergehenden Ansprüche, **dadurch gekennzeichnet, dass** alle Übertragungsfunktionen (Fo, Fo', K, K', BB) als Funktionen der Frequenz dargestellt werden.

**Claims**

**1.** Method for optimising control parameters, in which a transfer function (Fo) of a transformer (1), which consists of a control structure (2, 7) and a black box (3) as a system to be controlled, is experimentally determined, the transfer function (Fo) describing the frequency-dependent damping and phase displacement which a signal (X, E) applied to the transformer (1) undergoes, and in which quality criteria (Q, MM, BW, SI, HA, LA) are derived from the transfer function (Fo) of the transformer (1), said quality criteria (Q, MM, BW, SI, HA, LA) being used to optimise control parameters (Kp, Ki), **characterised in that**

a) after a modification of the control parameters (Kp, Ki), instead of a renewed experimental determination of a modified transfer function (Fo') of the transformer (1), a calculation of the modified transfer function (Fo') of the transformer from the transfer function (Fo) of the unmodified transformer (1) is carried out
b) **in that** the transfer function (K, FF) of the control structure (2, 7) is calculated before the modification of the control parameters (Kp, Ki) and a modified transfer function (K', FF') of the control structure (2, 7) is calculated after the modification, and
c) **in that** the modified transfer function (Fo') of the transformer is calculated as a function of the experimentally determined transfer function (Fo) of the unmodified transformer (1) and the unmodified and modified transfer functions (K, FF, K', FF') of the control structure (2, 7),
d) the calculation of the quality criteria (Q, MM, BW, SI, HA, LA) being repeated by means of the modified transfer function (Fo') of the transformer.

**2.** Method according to claim 1, **characterised in that** the transfer function (BB) of the black box (3) is calculated from data (X, E, Y) which are experimentally determined once and from the transfer functions (K, FF) used in the control structure (2, 7).

**3.** Method according to either of the preceding claims, **characterised in that** the transfer function (Fo) or the modified transfer function (Fo') applies to an open loop (4).

**4.** Method according to any one of the preceding claims, **characterised in that** the transfer function (Fo) of the transformer (1) is determined in the case of a closed loop.

**5.** Method according to any one of the preceding claims, **characterised in that** the transfer function (Fo) is experimentally determined by applying at least one noise signal (e1, e2, e3, e4) to the input of the transformer (1).

**6.** Method according to claim 5, **characterised in that** a plurality of noise signals (e1, e2, e3, e4) of different frequency ranges are applied.

**7.** Method according to claim 6, **characterised in that** the noise signals (e1, e2, e3, e4) are of varying intensities (i1, i2, i3, i4).

**8.** Method according to any one of the preceding claims, **characterised in that** all the transfer functions (Fo, Fo', K, K', BB) are represented as functions of the frequency.

**Revendications**

**1.** Procédé d'optimisation de paramètres de régulateur, selon lequel on détermine par voie expérimentale une fonction de transfert (Fo) d'un transducteur (1), constitué d'une structure de régulateur (2, 7) et d'une boîte noire (3), en tant que système à réguler, la fonction de transfert (Fo) décrivant l'atténuation et le déphasage qui dépendent de la fréquence et que subit un signal (X, E) appliqué au transducteur (1), et selon lequel des critères de qualité (Q, MM, BW, SI, HA, LA) sont déduits de la fonction de transfert (Fo) du transducteur (1), lesdits critères de qualité (Q, MM, BW, SI, HA, LA) étant utilisés pour optimiser des paramètres de régulateur (Kp, Ki), **caractérisé en ce que**

a) après une modification des paramètres de régulateur (Kp, Ki), on opère non pas une nouvelle détermination par voie expérimentale d'une fonction de transfert modifiée (Fo') du transducteur (1), mais un calcul de la fonction de transfert modifiée (Fo') du transducteur à partir de la fonction de transfert (Fo) du transducteur (1) non modifié,
b) en calculant la fonction de transfert (K, FF) de la structure de régulateur (2, 7) avant la modification des paramètres de régulateur (Kp, Ki), et en calculant une fonction de transfert modifiée (K', FF') de la structure de régulateur (2, 7) après la modification, et
c) en calculant la fonction de transfert modifiée (Fo') du transducteur, en tant que fonction de la fonction de transfert (Fo) déterminée par voie expérimentale du transducteur (1) non modifié et des fonctions de transfert non modifiées et modifiées (K, FF, K', FF') de la structure de régulateur (2, 7),
d) et le calcul des critères de qualité (Q, MM, BW, SI, HA, LA) étant répété à l'aide de la fonction de transfert modifiée (Fo') du transducteur.

**2.** Procédé selon la revendication 1, **caractérisé en ce que** la fonction de transfert (BB) de la boîte noire (3) est calculée à partir de données (X, E, Y) déterminées une fois par voie expérimentale et des fonctions de transfert (K, FF) utilisées dans la structure de régulateur (2, 7).

**3.** Procédé selon une des revendications précédentes, **caractérisé en ce que** la fonction de transfert (Fo) ou la fonction de transfert modifiée (Fo') s'applique au cas d'une boucle d'asservissement (4) ouverte.

**4.** Procédé selon une des revendications précédentes, **caractérisé en ce que** la fonction de transfert (Fo) du transducteur (1) est déterminée lorsque la boucle d'asservissement (4) est fermée.

**5.** Procédé selon une des revendications précédentes, **caractérisé en ce que** la détermination par voie expérimentale de la fonction de transfert (Fo) est réalisée par application d'au moins un signal de bruit (e1, e2, e3, e4) à l'entrée du transducteur (1).

**6.** Procédé selon la revendication 5, **caractérisé en ce que** l'on utilise plusieurs signaux de bruit (e1, e2, e3, e4) de gammes de fréquence différentes.

**7.** Procédé selon la revendication 6, **caractérisé en ce que** les signaux de bruit (e1, e2, e3, e4) présentent des intensités (i1, i2, i3, i4) différentes.

**8.** Procédé selon une des revendications précédentes, **caractérisé en ce que** toutes les fonctions de transfert (Fo, Fo', K, K', BB) sont représentées en tant que fonctions de la fréquence.

FIG. 1a

$x(t)$ →　| $f_o(t)$ |　→ $y(t)$

1

FIG. 1b

$X$ →　| $F_o$ |　→ $Y$

1

FIG. 2a

FIG. 2b

FIG. 2c

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10316977 A1

- EP 1180734 B1

**In der Beschreibung aufgeführte Nicht-Patentliteratur**

- **PARTANEN A G et al.** Two stage iterative identification/controller design and direct experimental controller refinement. *PROCEEDINGS OF THE CONFERENCE ON DECISION AND CONTROL. SAN ANTONIO, DEC. 15 - 17, 1993, NEW YORK, IEEE, US,* 15. Dezember 1993, vol. 3, 2833-2838